# EUROPÄISCHE PATENTSCHRIFT

(11) **EP 3 105 274 B1**
(45) Veröffentlichungstag und Bekanntmachung des Hinweises auf die Patenterteilung: **14.03.2018**
(21) Anmeldenummer: 15702428.2
(22) Anmeldetag: 27.01.2015
(51) Int. Cl.: C08G 18/76, C08J 9/14, C08G 18/40, C08G 18/42, C08G 18/48, C08K 5/00

(54) **VERFAHREN ZUR HERSTELLUNG VON POLYURETHAN-HARTSCHÄUMEN UND POLYISOCYANURAT-HARTSCHÄUMEN**
METHOD FOR MANUFACTURING POLYURETHANE SOLID FOAMS AND POLYISOCYANURATE SOLID FOAMS
PROCÉDÉ DE FABRICATION DE MOUSSES RIGIDES DE POLYURÉTHANE ET DE POLYISOCYANURATE

(30) Priorität: 11.02.2014 EP 14154645
(43) Veröffentlichungstag der Anmeldung: 21.12.2016
(73) Patentinhaber: BASF SE, 67056 Ludwigshafen am Rhein (DE)
(72) Erfinder: KALUSCHKE, Tobias, 49413 Dinklage (DE); KAMPF, Gunnar, 32369 Rahden (DE)
(74) Vertreter: BASF IP Association
(86) Internationale Anmeldenummer: PCT/EP2015/051569
(87) Internationale Veröffentlichungsnummer: WO 2015/121057

(56) Entgegenhaltungen:
- WO-A2-2010/043624
- WO-A2-2012/126916

## Beschreibung

Die vorliegende Erfindung betrifft Polyesterpolyole erhältlich oder erhalten durch Veresterung von 10 bis 70 Mol-% mindestens einer Verbindung aus der Gruppe bestehend aus Terephthalsäure (TPA), Dimethylterephthalat (DMT), Polyethylenterephthalat (PET), Phthalsäureanhydrid (PSA), Phthalsäure und Isophthalsäure, 0,1 bis 30 Mol-% einer oder mehrerer Fettsäuren und/oder Fettsäurederivate, 10 bis 70 Mol-% eines oder mehrerer aliphatischer oder cycloaliphatischer Diole mit 2 bis 18 C-Atomen oder Alkoxylaten davon, 5 bis 70 Mol-% eines Polyetherpolyols, hergestellt durch die Alkoxylierung eines aromatischen Startermoleküls mit einer Funktionalität von größer oder gleich 2, und von 0 bis 70 Mol-% eines von dem Polyetherpolyol verschiedenen Tri- oder Polyols, jeweils bezogen auf die Gesamtmenge der eingesetzten Komponenten, wobei sich die Mengen der eingesetzten Komponenten zu 100 Mol-% addieren. Weiter betrifft die vorliegende Erfindung ein Verfahren zur Herstellung von Polyurethan-Hartschaumstoffen oder Polyisocyanurat- Hartschaumstoffen umfassend die Umsetzung einer Isocyanatkomponente mit einer Polyolkomponente (PK) enthaltend ein erfindungsgemäßes Polyesterpolyol und weitere Komponenten, die Polyolkomponente als solches sowie die Polyurethan-Hartschaumstoffe oder Polyisocyanurat-Hartschaumstoffe, erhältlich oder erhalten nach einem erfindungsgemäßen Verfahren. Die vorliegende Erfindung betrifft auch die Verwendung eines erfindungsgemäßen Polyesterpolyols (P1) zur Herstellung von Polyurethan-Hartschaumstoffen oder Polyisocyanurat-Hartschaumstoffen.

Die Herstellung von Polyurethan-Hartschaumstoffen durch Umsetzung von organischen oder modifizierten organischen Di- oder Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist an sich bekannt und wird in zahlreichen Patent- und Literaturveröffentlichungen beschrieben.

Im Rahmen der vorliegenden Offenbarung werden die Begriffe "Polyesterpolyol", "Polyesterol", "Polyesteralkohol" und die Abkürzung "PESOL" gleichbedeutend verwendet.

Bei Einsatz von Polyesterpolyolen zur Herstellung von Polyurethan-Hartschaumstoffen ist es üblich, Polykondensate aus aromatischen und/oder aliphatischen Dicarbonsäuren und Alkandiolen und/oder-triolen bzw. Etherdiolen einzusetzen. Es ist aber auch möglich, Polyesterabfälle und hier insbesondere Polyethylenterephthalat (PET)- bzw. Polybutylenterephthalat (PBT)-Abfälle zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat. Beispielsweise in DE-A 100 37 14 und US 5,051,528 werden derartige Umesterungen unter Einsatz von Methanol und Umesterungskatalysatoren beschrieben.

Ferner ist bekannt, dass Terephthalsäure-basierte Ester bezüglich des Brandverhaltens Phthalsäure-basierten Estern überlegen sind, wie zum Beispiel in WO 2010/043624 beschrieben. Diese Eigenschaft ist vor allem im Baubereich, in welchen Polyurethan- und Polyisocyanurat-Hartschaumstoffe verwendet werden, wichtig.

Allerdings ist das Problem des Verhaltens von PU-Hartschaumstoffen im Brandfall weiterhin optimierungsbedürftig, da immer höhere Anforderungen an die Materialien gestellt werden.

Der Zusatz von Flammschutzmitteln ist insofern schwierig, da durch den Zusatz größerer Mengen an Flammschutzmitteln die Eigenschaften des erhaltenen Polyurethan-Hartschaums oder Polyisocyanurat-Hartschaums beeinflusst werden. Demgemäß lag eine der Erfindung zugrundeliegende Aufgabe darin, geeignete Aufbaukomponenten für die Herstellung von Polyurethan-Hartschäumen oder Polyisocyanurat-Hartschäumen bereitzustellen, die das Brandverhalten des damit hergestellten Polyurethan- oder Polyisocyanurat-Hartschaum im Brandfall verbessern und gleichzeitig keinen negativen Einfluss auf die übrigen Eigenschaften des Hartschaums haben.

Ausgehend vom Stand der Technik lag der vorliegenden Erfindung demgemäß die Aufgabe zugrunde, Polyurethan-Hartschäume oder Polyisocyanurat-Hartschäume bereitzustellen, die gute Brandschutzeigenschaften aufweisen und gute Eigenschaftsprofile für die Anwendungen im Baubereich aufweisen.

Eine weitere der vorliegenden Erfindung zugrunde liegende Aufgabe lag darin, Polyesterpolyole bereitzustellen, die zur Herstellung von Polyurethan- oder Polyisocyanurat-Hartschaum geeignet sind und die das Brandverhalten des damit hergestellten Polyurethan- oder Polyisocyanurat-Hartschaum im Brandfall optimieren.

Erfindungsgemäß wird diese Aufgabe gelöst durch ein Polyesterpolyol (P1), erhältlich oder erhalten durch Veresterung der Komponenten (i) bis (v)
(i) 10 bis 70 Mol-% mindestens einer Verbindung aus der Gruppe bestehend aus Terephthalsäure (TPA), Dimethylterephthalat (DMT), Polyethylenterephthalat (PET), Phthalsäureanhydrid (PSA), Phthalsäure und Isophthalsäure,
(ii) 0,1 bis 30 Mol-% einer oder mehrerer Fettsäuren und/oder Fettsäurederivate,
(iii) 10 bis 70 Mol-% eines oder mehrerer aliphatischer oder cycloaliphatischer Diole mit 2 bis 18 C-Atomen oder Alkoxylaten davon,
(iv) 5 bis 70 Mol-% eines Polyetherpolyols, hergestellt durch die Alkoxylierung eines aromatischen Startermoleküls mit einer Funktionalität von größer oder gleich 2,
(v) 0 bis 70 Mol-% eines von Komponente (iv) verschiedenen Tri- oder Polyols,
jeweils bezogen auf die Gesamtmenge der Komponenten (i) bis (v), wobei sich die Mengen der eingesetzten Komponenten (i) bis (v) zu 100 Mol-% addieren.

Gemäß einem weiteren Aspekt betriff die vorliegende Erfindung auch ein Verfahren zur Herstellung von Polyurethan-Hartschaumstoffen oder Polyisocyanurat-Hartschaumstoffen umfassend die Umsetzung von
A) einer Komponente (A) enthaltend mindestens eine Verbindung ausgewählt aus der Gruppe bestehend aus organischen Diisocyanaten, modifizierten organischen Diisocyanaten, organischen Polyisocyanaten und modifizierten organischen Polyisocyanaten, mit
B) einer Polyolkomponente (PK) enthaltend
   (b1.1) mindestens ein Polyesterpolyol (P1) wie zuvor beschrieben,
   (b2) mindestens ein Flammschutzmittel,
   (b3) mindestens ein Treibmittel,
   (b4) mindestens einen Katalysator.

Die Erfindung wird nachfolgend näher erläutert. Kombinationen von bevorzugten Ausführungsformen verlassen den Rahmen der vorliegenden Erfindung nicht. Dies gilt insbesondere in Bezug auf die als bevorzugt gekennzeichneten Ausführungsformen der einzelnen Komponenten der vorliegenden Erfindung. Die nachfolgend im Rahmen von Komponente aufgeführten Ausführungsformen beziehen sich sowohl auf das erfindungsgemäße Verfahren und die so erhältlichen Hartschaumstoffe als auch auf die erfindungsgemäßen Polyolkomponenten und Polyesterpolyole.

Das erfindungsgemäße Polyesterpolyol (P1) ist erhältlich oder erhalten durch Veresterung der Komponenten (i) bis (v). Es hat sich überraschend gezeigt, dass das erfindungsgemäße Polyesterpolyol (P1) bzw. die spezielle Zusammensetzung der Komponenten (i) bis (v) bei der Herstellung des Polyesterpolyols beim Einsatz des Polyetheropolyols (P1) zur Herstellung von Polyurethan-Hartschäumen oder Polyisocyanurat-Hartschäumen zu Materialien mit besonders guten Brandschutzeigenschaften führt.

Dabei wird als Komponente (i) mindestens einer Verbindung aus der Gruppe bestehend aus Terephthalsäure (TPA), Dimethylterephthalat (DMT), Polyethylenterephthalat (PET), Phthalsäureanhydrid (PSA), Phthalsäure und Isophthalsäure in einer Menge im Bereich von 10 bis 70 Mol-% eingesetzt. Als Komponente (ii) wird eine oder mehrerer Fettsäuren und/oder Fettsäurederivate in einer Menge im Bereich von 0,1 bis 30 Mol-% eingesetzt. Als Komponente (iii) wird ein oder mehrere aliphatische oder cycloaliphatische Diole mit 2 bis 18 C-Atomen oder Alkoxylaten davon in einer Menge im Bereich von 10 bis 70 Mol-% eingesetzt. Als Komponente (iv) wird erfindungsgemäß ein Polyetherpolyol, hergestellt durch die Alkoxylierung eines aromatischen Startermoleküls mit einer Funktionalität von größer oder gleich 2 in einer Menge im Bereich von 5 bis 70 Mol-% eingesetzt. Schließlich wird als Komponente (v) ein von Komponente (iv) verschiedenes Tri- oder Polyol in einer Menge im Bereich von 0 bis 70 Mol-% eingesetzt. Dabei sind die Mengenangaben jeweils bezogen auf die Gesamtmenge der Komponenten (i) bis (v), wobei sich die Mengen der eingesetzten Komponenten (i) bis (v) zu 100 Mol-% addieren.

Im Rahmen der vorliegenden Erfindung werden die Begriffe "Polyesterpolyol" und "Polyesterol" gleichbedeutend verwendet, ebenso die Begriffe "Polyetherpolyol" und "Polyetherol".

Erfindungsgemäß wird die Komponente (i) in einer Menge im Bereich von 10 bis 70 Mol-% eingesetzt, bezogen auf die Gesamtmenge der Komponenten (i) bis (v), wobei sich die Mengen der eingesetzten Komponenten (i) bis (v) zu 100 Mol-% addieren. Vorzugsweise wird die Komponente (i) in Mengen von 15 bis 65 Mol-%, besonders bevorzugt 18 bis 60 Mol-%, spezifischer 20 bis 50 Mol-% und noch spezieller 25 bis 40 Mol-% eingesetzt, jeweils bezogen auf die Gesamtmenge der Komponenten (i) bis (v), wobei sich die Mengen der eingesetzten Komponenten (i) bis (v) zu 100 Mol-% addieren.

Erfindungsgemäß wird die Komponente (ii) in einer Menge im Bereich von 0,1 bis 30 Mol-% eingesetzt, bezogen auf die Gesamtmenge der Komponenten (i) bis (v), wobei sich die Mengen der eingesetzten Komponenten (i) bis (v) zu 100 Mol-% addieren. Vorzugsweise wird die Komponente (ii) in Mengen von 0,5 bis 30 Mol-%, besonders bevorzugt 1 bis 25 Mol-%, spezifischer 2 bis 20 Mol-%, noch spezieller 3 bis 14 Mol-% und speziell 8 bis 14 Mol-% verwendet, jeweils bezogen auf die Gesamtmenge der Komponenten (i) bis (v), wobei sich die Mengen der eingesetzten Komponenten (i) bis (v) zu 100 Mol-% addieren.

Erfindungsgemäß wird die Komponente (iii) in einer Menge im Bereich von 10 bis 70 Mol-% eingesetzt, bezogen auf die Gesamtmenge der Komponenten (i) bis (v), wobei sich die Mengen der eingesetzten Komponenten (i) bis (v) zu 100 Mol-% addieren. Vorzugsweise wird die Komponente (iii) in Mengen von 20 bis 60 Mol-%, besonders bevorzugt 25 bis 55 Mol-% eingesetzt, jeweils bezogen auf die Gesamtmenge der Komponenten (i) bis (v), wobei sich die Mengen der eingesetzten Komponenten (i) bis (v) zu 100 Mol-% addieren.

Erfindungsgemäß wird die Komponente (iv) in einer Menge im Bereich von 5 bis 70 Mol-% eingesetzt, bezogen auf die Gesamtmenge der Komponenten (i) bis (v), wobei sich die Mengen der eingesetzten Komponenten (i) bis (v) zu 100 Mol-% addieren. Vorzugsweise wird die Komponente (iv) in Mengen von 5 bis 60 Mol-%, besonders bevorzugt 5 bis 50 Mol-%, spezifischer 10 bis 35 Mol-%, noch spezieller 12 bis 30 Mol-%, und im Speziellen 12 bis 18 Mol-% eingesetzt, jeweils bezogen auf die Gesamtmenge der Komponenten (i) bis (v), wobei sich die Mengen der eingesetzten Komponenten (i) bis (v) zu 100 Mol-% addieren.

Erfindungsgemäß wird die Komponente (v) in einer Menge im Bereich von 0 bis 70 Mol-% eingesetzt, bezogen auf die Gesamtmenge der Komponenten (i) bis (v), wobei sich die Mengen der eingesetzten Komponenten (i) bis (v) zu 100 Mol-% addieren. Vorzugsweise wird, bei Verwendung der Komponente (v), diese in Mengen von 5 bis 60 Mol-%, besonders bevorzugt 5 bis 50 Mol-%, spezifischer 10 bis 35 Mol-%, noch spezieller 12 bis 30 Mol-%, und im Speziellen 12 bis 18 Mol-% eingesetzt, jeweils bezogen auf die Gesamtmenge der Komponenten (i) bis (v), wobei sich die Mengen der eingesetzten Komponenten (i) bis (v) zu 100 Mol-% addieren. Erfindungsgemäß ist es auch möglich, dass die Komponente (v) in einer Menge von 0 Mol-% eingesetzt wird. Gemäß einer alternativen Ausführungsform wird die Komponente (v) in Mengen von 0 bis 18 Mol-% eingesetzt, jeweils bezogen auf die Gesamtmenge der Komponenten (i) bis (v), wobei sich die Mengen der eingesetzten Komponenten (i) bis (v) zu 100 Mol-% addieren.

Demgemäß betrifft die vorliegende Erfindung gemäß einer weiteren Ausführungsform auch ein Polyesterpolyol (P1) erhältlich oder erhalten durch Veresterung der Komponenten (i) bis (v) wie zuvor beschrieben, wobei die Komponenten (i) bis (v) in folgenden Mengen eingesetzt werden
Komponente (i) in einer Menge im Bereich von 25 bis 40 Mol-%,
Komponente (ii) in einer Menge im Bereich von 8 bis 14 Mol-%,
Komponente (iii) in einer Menge im Bereich von 25 bis 55 Mol-%,
Komponente (iv) in einer Menge im Bereich von 12 bis 18 Mol-%, und
Komponente (v) in einer Menge im Bereich von 0 bis 18 Mol-%,
jeweils bezogen auf die Gesamtmenge der Komponenten (i) bis (v), wobei sich die Mengen der eingesetzten Komponenten (i) bis (v) zu 100 Mol-% addieren.

Weiter betrifft die vorliegende Erfindung gemäß einer weiteren Ausführungsform auch ein Polyesterpolyol (P1) erhältlich oder erhalten durch Veresterung der Komponenten (i) bis (v) wie zuvor beschrieben, wobei die Komponenten (i) bis (v) in folgenden Mengen eingesetzt werden
Komponente (i) in einer Menge im Bereich von 25 bis 40 Mol-%,
Komponente (ii) in einer Menge im Bereich von 8 bis 14 Mol-%,
Komponente (iii) in einer Menge im Bereich von 25 bis 55 Mol-%,
Komponente (iv) in einer Menge im Bereich von 12 bis 18 Mol-%, und
Komponente (v) in einer Menge von 0 Mol-%,
jeweils bezogen auf die Gesamtmenge der Komponenten (i) bis (v), wobei sich die Mengen der eingesetzten Komponenten (i) bis (v) zu 100 Mol-% addieren.

Gemäß einer alternativen Ausführungsform betrifft die vorliegende Erfindung auch ein Polyesterpolyol (P1) erhältlich oder erhalten durch Veresterung der Komponenten (i) bis (v) wie zuvor beschrieben, wobei die Komponenten (i) bis (v) in folgenden Mengen eingesetzt werden
Komponente (i) in einer Menge im Bereich von 25 bis 40 Mol-%,
Komponente (ii) in einer Menge im Bereich von 8 bis 14 Mol-%,
Komponente (iii) in einer Menge im Bereich von 25 bis 55 Mol-%,
Komponente (iv) in einer Menge im Bereich von 12 bis 18 Mol-%, und
Komponente (v) in einer Menge im Bereich von 12 bis 18 Mol-%, jeweils bezogen auf die Gesamtmenge der Komponenten (i) bis (v), wobei sich die Mengen der eingesetzten Komponenten (i) bis (v) zu 100 Mol-% addieren.

Erfindungsgemäß ist Komponente (i) mindesten eine Verbindung aus der Gruppe bestehend aus Terephthalsäure (TPA), Dimethylterephthalat (DMT), Polyethylenterephthalat (PET), Phthalsäureanhydrid (PSA), Phthalsäure und Isophthalsäure. Vorzugsweise weist die Komponente (i) mindestens eine Verbindung aus der Gruppe bestehend aus Terephthalsäure (TPA), Dimethylterephthalat (DMT), Polyethylenterephthalat (PET), Phthalsäureanhydrid (PSA) und Phthalsäure, besonders bevorzugt bestehend aus Terephthalsäure (TPA), Dimethylterephthalat (DMT) und Polyethylenterephthalat (PET). Insbesondere bevorzugt enthält die Komponente (i) mindestens eine Verbindung aus der Gruppe bestehend aus Terephthalsäure und Dimethylterephthalat (DMT). Im speziellen besteht die Komponente (i) aus Terephthalsäure.

Demgemäß betrifft die vorliegende Erfindung gemäß einer weiteren Ausführungsform auch ein Polyesterpolyol (P1) erhältlich oder erhalten durch Veresterung der Komponenten (i) bis (v) wie zuvor beschrieben, wobei die Komponente (i) ausgewählt ist aus der Gruppe bestehend aus Terephthalsäure und Dimethylterephthalat (DMT).

Erfindungsgemäß ist Komponente (ii) eine oder mehrere Fettsäuren und/oder Fettsäurederivate. In einer Ausführungsform der Erfindung ist die Fettsäure oder das Fettsäurederivat gemäß Komponente (ii) ausgewählt aus der Gruppe bestehend aus Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, tierischem Talg, wie beispielsweise Rindertalg, Fettsäuren, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

In einer bevorzugten Ausführungsform der vorliegenden Erfindung ist die Fettsäure oder das Fettsäurederivat (ii) ausgewählt aus der Gruppe bestehend aus Ölsäure, Sojaöl, Rapsöl oder Talg, besonders bevorzugt Ölsäure, Sojaöl, Rapsöl oder Rindertalg und im speziellen Ölsäure.

Der Zusatz von Fettsäure oder einem Fettsäurederivat verbessert unter anderem die Treibmittellöslichkeit bei der Herstellung von Polyurethanschaumstoffen.

Demgemäß betrifft die vorliegende Erfindung gemäß einer weiteren Ausführungsform auch ein Polyesterpolyol (P1) erhältlich oder erhalten durch Veresterung der Komponenten (i) bis (v) wie zuvor beschrieben, wobei die Komponente (ii) ausgewählt ist aus der Gruppe bestehend aus Ölsäure, Sojaöl, Rapsöl und Talg.

Erfindungsgemäß enthält Komponente (iii) ein oder mehrere aliphatische oder cycloaliphatische Diole mit 2 bis 18 C-Atomen oder Alkoxylate davon. Vorzugsweise ist das aliphatische oder cycloaliphatische Diol ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylaten, bevorzugt Ethoxylaten, derselben. Besonders bevorzugt ist das aliphatische Diol ausgewählt aus der Gruppe bestehend aus Polyethylenglykol (PEG), Diethylenglykol (DEG) und Monoethylenglykol (MEG), besonders bevorzugt bestehend aus Diethylenglykol (DEG) und Monoethylenglykol (MEG), insbesondere Diethylenglykol (DEG).

Demgemäß betrifft die vorliegende Erfindung gemäß einer weiteren Ausführungsform auch ein Polyesterpolyol (P1) erhältlich oder erhalten durch Veresterung der Komponenten (i) bis (v) wie zuvor beschrieben, wobei die Komponente (iii) ausgewählt ist aus der Gruppe bestehend aus Diethylenglykol (DEG) und Monoethylenglykol (MEG).

Erfindungsgemäß ist Komponente (iv) ein Polyetherpolyol, hergestellt durch die Alkoxylierung eines aromatischen Startermoleküls mit einer Funktionalität von größer oder gleich 2. Beispiele für solche aromatischen Startermoleküle sind beispielsweise aromatische Di- und Polycarbonsären wie Terephthalsäure, Phthalsäure und Isophthalsäure, Bisphenol A, Anilin und deren Derivate, jegliches Diphenylmethandiamin Isomer (MDA), polymeres MDA (pMDA) und jegliches Toluylendiamin-Isomer (TDA). Bevorzugt werden keine aromatischen Carbonsäuren als Starter verwendet. Besonders bevorzugt ist der Starter ausgewählt aus der Gruppe bestehend aus Bisphenol A, Anilin und deren Derivate, MDA, pMDA und TDA, besonders bevorzugt bestehend aus Bisphenol A, MDA, pMDA und TDA, weiter bevorzugt bestehend aus MDA, pMDA und TDA und im Speziellen bestehend aus MDA und TDA, weiter bevorzugt TDA.

Besonders bevorzugt ist die Verwendung einer Toluylendiamin (TDA) Isomeren Mischung als Starter mit einem Gehalt an Isomeren mit einer vizinalen Stellung der beiden Amingruppen zueinander von mindestens 50 Gew.-%, vorzugsweise mindestens 70 Gew.-%, besonders bevorzugt mindestens 80 Gew.-%, spezifischer mindestens 90 Gew.-% und im Speziellen mindestens 95 Gew.-%.

Vorzugsweise wird ein Polyetherpolyol (iv) mit einer Funktionalität größer 2 eingesetzt, das durch Alkoxylierung eines aromatischen Polyols mit einer Funktionalität größer oder gleich 3 hergestellt wurde.

Im Allgemeinen weist das Polyetherpolyol (iv) eine Funktionalität von größer als 2 auf. Vorzugsweise weist es eine Funktionalität größer oder gleich 2,7, insbesondere größer oder gleich 2,9, spezieller größer oder gleich 3,5. Im Allgemeinen weist es eine Funktionalität von kleiner oder gleich 6, bevorzugt kleiner oder gleich 5, besonders bevorzugt kleiner oder gleich 4 auf.

In einer besonders bevorzugten Ausführungsform ist das Polyetherpolyol (iv) erhältlich oder erhalten durch Alkoxylierung mit Ethylenoxid. Es wurde gefunden, dass der Einsatz dieser Verbindungen zu Polyurethan-Hartschaumstoffen bzw. Polyisocyanurat-Hartschaumstoffen mit verbesserten Brandschutzeigenschaften führt.

Gemäß einer Ausführungsform der vorliegenden Erfindung ist das Polyetherpolyol (iv) erhältlich durch Umsetzung eines aromatischen Polyols mit einer Funktionalität von größer als 2 mit Ethylenoxid und/ oder Propylenoxid, bevorzugt mit Ethylenoxid.

In einer besonders bevorzugten Ausführungsform der vorliegenden Erfindung wird die Komponente (iv) durch anionische Polymerisation von Propylenoxid oder Ethylenoxid, bevorzugt Ethylenoxid, in Gegenwart von Alkoxylierungs-Katalysatoren wie Alkalihydroxiden, wie Natrium- oder Kaliumhydroxid (KOH), oder Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und Imidazolderivate sowie Mischungen daraus, unter Verwendung mindestens eines aromatischen Startermoleküls hergestellt. Bevorzugte Alkoxylierungskatalysatoren sind dabei KOH und aminische Alkoxylierungs-Katalysatoren. Da bei Verwendung von KOH als Alkoxylierungs-Katalysator der Polyether zunächst neutralisiert werden muss, und das entstehende Kaliumsalz abgetrennt werden muss, bevor der Polyether als Komponente (iv) in der Veresterung eingesetzt werden kann, ist die Verwendung von aminischen Alkoxylierungs-Katalysatoren bevorzugt. Bevorzugte aminische Alkoxylierungs-Katalysatoren sind ausgewählt aus der Gruppe bestehend aus Dimethylethanolamin (DMEOA), Imidazol und Imidazolderivate sowie Mischungen daraus, besonders bevorzugt Imidazol.

Vorzugsweise weist das Polyetherpolyol (iv), hergestellt durch die Alkoxylierung eines aromatischen Startermoleküls mit einer Funktionalität von größer oder gleich 2, eine OH-Zahl größer oder gleich 100, bevorzugt größer oder gleich 200, besonders bevorzugt größer oder gleich 300, spezifischer größer oder gleich 400 und im Speziellen größer oder gleich 500 mg KOH/g auf.

Ferner weist das Polyetherpolyol (iv), hergestellt durch die Alkoxylierung eines aromatischen Startermoleküls mit einer Funktionalität von größer oder gleich 2, bevorzugt eine OH-Zahl kleiner oder gleich 1800, noch bevorzugter kleiner oder gleich 1200, besonders bevorzugt kleiner oder gleich 1000, spezifischer kleiner oder gleich 800, im Speziellen kleiner oder gleich 700 und spezifisch kleiner oder gleich 600 mg KOH/g auf.

In einer besonders bevorzugten Ausführungsform der Erfindung besteht das Polyetherpolyol (iv) aus dem Umsetzungsprodukt von Toluylendiamin (TDA) mit Ethylenoxid, wobei die OH-Zahl des Polyetherpolyols (iv) im Bereich von 400 bis 800 mg KOH/g, bevorzugt 500 bis 600 mg KOH/g, liegt und Imidazol als Alkoxylierungs-Katalysator Verwendung findet.

Demgemäß betrifft die vorliegende Erfindung gemäß einer weiteren Ausführungsform auch ein Polyesterpolyol (P1) erhältlich oder erhalten durch Veresterung der Komponenten (i) bis (v) wie zuvor beschrieben, wobei die Komponente (iv) erhältlich oder erhalten ist durch Ethoxylierung eines aromatischen Polyols mit einer Funktionalität von größer als 2.

Demgemäß betrifft die vorliegende Erfindung gemäß einer weiteren Ausführungsform auch ein Polyesterpolyol (P1) erhältlich oder erhalten durch Veresterung der Komponenten (i) bis (v) wie zuvor beschrieben, wobei die Komponente (iv) erhältlich oder erhalten ist durch Ethoxylierung einer Zusammensetzung bestehend aus Toluylendiamin-Isomeren, und der Gehalt der Zusammensetzung an Toluylendiamin-Isomeren mit einer vizinalen Stellung der beiden Aminogruppen mindestens 90 Gew.-% ist.

Erfindungsgemäß wird als Komponente (v) ein von Komponente (iv) verschiedenes Tri- oder Polyol eingesetzt. Vorzugsweise ist das Tri- oder Polyol (v), welches von der Komponenten (iv) verschieden ist, ausgewählt aus der Gruppe bestehend aus Polyolen mit einer Funktionalität größer oder gleich 3, bzw. Alkoxylaten, bevorzugt Ethoxylaten, davon. Die Verwendung von Ethylenoxid führt zu Hartschäumen mit verbesserten Brandeigenschaften.

Als Beispiele für Polyole mit einer Funktionalität größer oder gleich 3 sind insbesondere zu nennen: Glycerin, Trimethylolpropan, Pentaerythrit, Sorbit, Saccharose, Polyglycerin, sowie deren Alkoxylate.

Vorzugsweise ist im Rahmen der vorliegenden Erfindung Polyol (v) ausgewählt aus der Gruppe bestehend aus Glycerin, Trimethylolpropan, Pentaerythrit sowie deren Alkoxylate, besonders bevorzugt Glycerin, Trimethylolpropan sowie deren Alkoxylate, spezieller Glycerin sowie dessen Alkoxylate, spezifisch Glycerin-Alkoxylate und im Speziellen Glycerin-Ethoxylate verwendet.

Gemäß einer besonders bevorzugten Ausführungsform der vorliegenden Erfindung wird die Komponente (v) durch anionische Polymerisation von Propylenoxid oder Ethylenoxid, bevorzugt Ethylenoxid, in Gegenwart von Alkoxylierungs-Katalysatoren wie Alkalihydroxiden, wie Natrium- oder Kaliumhydroxid, oder Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und Imidazolderivate sowie Mischungen daraus, unter Verwendung mindestens eines Startermoleküls hergestellt. Bevorzugte Alkoxylierungs-Katalysatoren sind dabei KOH und aminische Alkoxylierungs-Katalysatoren. Da bei Verwendung von KOH als Alkoxylierungs-Katalysator der Polyether zunächst neutralisiert werden muss, und das entstehende Kaliumsalz abgetrennt werden muss, bevor der Polyether als Komponente (v) in der Veresterung eingesetzt werden kann, ist die Verwendung von aminischen Alkoxylierungs-Katalysatoren bevorzugt. Bevorzugte aminische Alkoxylierungs-Katalysatoren sind ausgewählt aus der Gruppe enthaltend Dimethylethanolamin (DMEOA), Imidazol und Imidazolderivate sowie Mischungen daraus, besonders bevorzugt Imidazol.

Vorzugsweise weist das Tri- oder Polyol (v) eine OH-Zahl im Bereich von 150 bis 1250 mg KOH/g, bevorzugt 300 bis 950 mg KOH/g, besonders bevorzugt 500 bis 800 mg KOH/g auf.

Vorzugsweise wird der Polyether (v) im Rahmen der vorliegenden Erfindung verwendet, wenn die mittlere Funktionalität der für die Herstellung von Komponente (iv) verwendeten aromatischen Starter kleiner 3, vorzugsweise kleiner 2,8, besonders bevorzugt kleiner 2,6, spezifischer kleiner 2,4 und im Speziellen kleiner 2,2 ist.

Vorzugsweise werden die Komponenten (iv) und (v) in solchen Mengen eingesetzt, dass pro kg des erfindungsgemäß erhaltenen Polyesterpolyols (P1) mindestens 200 mmol, bevorzugt mindestens 400 mmol, insbesondere bevorzugt mindestens 600 mmol, speziell bevorzugt mindestens 800 mmol, im speziellen mindestens 1000 mmol der Bestandteile der Komponenten (iv) und (v) mit einer OH-Funktionalität größer oder gleich 3 verwendet werden.

Vorzugsweise wird im Rahmen der vorliegenden Erfindung als Komponente (iv) ein Alkoxylierungsprodukt eines aromatischen Polyols mit einer Funktionalität größer oder gleich 3 und keine Komponente (v) verwendet. Vorzugsweise handelt es sich dabei bei dem aromatischen Polyol, welches zur Herstellung der Komponente (iv) verwendet wird, um MDA oder TDA, vorzugsweise TDA.

Vorzugsweise weist das erfindungsgemäße Polyesterpolyol (P1) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Zur Herstellung der Polyesterpolyole (P1) können die Komponenten (i) bis (v) katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280 °C, vorzugsweise 180 bis 260 °C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole (P1) werden die organischen Polycarbonsäuren und/oder - derivate und mehrwertigen Alkohole vorteilhafterweise im Molverhältnis von 1 : 1 bis 2,2, vorzugsweise 1 : 1,05 bis 2,1 und besonders bevorzugt 1 : 1,1 bis 2,0 polykondensiert.

Die erfindungsgemäßen Polyesterpolyole (P1) weisen im Allgemeinen ein zahlenmittleres Molekulargewicht von 300 g/mol bis 3000 g/mol, vorzugsweise 400 g/mol bis 1000 g/mol und insbesondere 450 g/mol bis 800 g/mol auf.

Demgemäß betrifft die vorliegende Erfindung gemäß einer weiteren Ausführungsform auch ein Polyesterpolyol (P1) erhältlich oder erhalten durch Veresterung der Komponenten (i) bis (v) wie zuvor beschrieben, wobei das Polyesterpolyol (P1) ein zahlenmittleres Molekulargewicht im Bereich von 450 g/mol bis 800 g/mol aufweist.

Die erfindungsgemäßen Polyesterpolyol (P1) können vorteilhaft bei der Herstellung von Polyurethanen bzw. Polyisocyanuraten, insbesondere Polyurethan- oder Polyisocyanurat-Hartschäumen eingesetzt werden. Die Herstellung von Polyurethanen ist grundsätzlich aus dem Stand der Technik bekannt. Dazu werden üblicherweise eine Isocyanatkomponente und eine Polyolkomponente unter Verwendung von Katalysatoren und Treibmitteln umgesetzt.

Die Verwendung der erfindungsgemäßen Polyesterpolyol (P1) in der Polylolkomponente führt zu Polyurethan- oder Polyisocyanurat-Schäumen mit vorteilhaftem Brandverhalten.

Zur Herstellung der Polyurethan-Hartschaumstoffe nach dem erfindungsgemäßen Verfahren finden, neben den oben beschriebenen erfindungsgemäßen Polyesterpolyolen (P1), die an sich bekannten Aufbaukomponenten Verwendung.

Gemäß einem weiteren Aspekt betriff die vorliegende Erfindung auch ein Verfahren zur Herstellung von Polyurethan-Hartschaumstoffen oder Polyisocyanurat- Hartschaumstoffen umfassend die Umsetzung von
A) einer Komponente (A) enthaltend mindestens eine Verbindung ausgewählt aus der Gruppe bestehend aus organischen Diisocyanaten, modifizierten organischen Diisocyanaten, organischen Polyisocyanaten und modifizierten organischen Polyisocyanaten, mit
B) einer Polyolkomponente (PK) enthaltend
   (b1.1) mindestens ein Polyesterpolyol (P1) wie zuvor beschrieben,
   (b2) mindestens ein Flammschutzmittel,
   (b3) mindestens ein Treibmittel,
   (b4) mindestens einen Katalysator.

Die Polyolkomponente (PK) enthält erfindungsgemäß mindestens ein Polyesterpolyol (P1) und kann weitere gegenüber Isocyanaten reaktive Verbindungen enthalten, insbesondere weitere Polyesterpolyole oder Polyetherpolyole.

Demgemäß betrifft die vorliegende Erfindung gemäß einer weiteren Ausführungsform auch ein Verfahren zur Herstellung von Polyurethan-Hartschaumstoffen oder Polyisocyanurat- Hartschaumstoffen wie zuvor beschrieben, wobei die Polyolkomponente (PK) eine oder mehrere der folgenden Verbindungen enthält
(b1.2) mindestens ein Polyesterpolyol (P2), das sich von dem Polyesterpolyol (P1) unterscheidet,
(b1.3) mindestens eine Verbindung ausgewählt aus der Gruppe bestehend aus Polyetherolen (P3), Verbindungen mit mindestens zwei gegenüber Isocyanaten reaktiven Gruppen, Kettenverlängerungsmitteln und Vernetzungsmitteln,
(b5) weitere Hilfsmittel und/oder Zusatzstoffe.

Erfindungsgemäß enthält die Komponente (A) mindestens eine Verbindung ausgewählt aus der Gruppe bestehend aus organischen Diisocyanaten, modifizierten organischen Diisocyanaten, organischen Polyisocyanaten und modifizierten organischen Polyisocyanaten.

Unter Polyisocyanat wird im Rahmen der vorliegenden Erfindung eine organische Verbindung verstanden, welche mehr als zwei reaktive Isocyanatgruppen pro Molekül enthält, d. h. die Funktionalität ist größer als 2. Unter Diisocyanat wird im Rahmen der vorliegenden Erfindung eine organische Verbindung verstanden, welche zwei reaktive Isocyanatgruppen pro Molekül enthält, d. h. die Funktionalität ist 2.

Als in der Komponente (A) enthaltene organisch oder modifizierte organische Di- oder Polyisocyanate kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (A) in diesem Fall verschiedene mehrfunktionelle Isocyanate enthält. Als in der Komponente (A) enthaltene Verbindungen in Betracht kommende mehrfunktionelle Isocyanate weisen zwei (Diisocyanate) oder mehr als zwei (Polyisocyanate) Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methyl-pentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate im Rahmen der vorliegenden Erfindung:
a) Mehrfunktionelle Isocyanate auf Basis von Toluylendiisocyanat (TDI), insbesondere 2,4-TDI oder 2,6-TDI oder Mischungen aus 2,4- und 2,6-TDI;
b) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
c) Gemische aus mindestens einem aromatischen Isocyanat gemäß Ausführungsform a) und mindestens einem aromatischen Isocyanat gemäß Ausführungsform b).

Als Polyisocyanat im Rahmen der vorliegenden Erfindung ganz besonders bevorzugt ist polymeres Diphenylmethandiisocyanat. Bei polymerem Diphenylmethandiisocyanat (im Folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente (A) mindestens zwei, insbesondere mindestens 2,2 und besonders bevorzugt mindestens 2,4. Die Funktionalität der Komponente (A) beträgt bevorzugt von 2,2 bis 4 und besonders bevorzugt von 2,4 bis 3.

Vorzugsweise beträgt der Gehalt an Isocyanatgruppen der Komponente (A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente (A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (A) besonders bevorzugt oligomeres Diphenylmethandiisocyanat und weist eine Funktionalität von mindestens 2,4 auf.

Die Viskosität der eingesetzten Komponente (A) kann in einem weiten Bereich variieren. Vorzugsweise weist die Komponente (A) eine Viskosität von 100 bis 3000 mPa*s, besonders bevorzugt von 200 bis 2500 mPa*s, auf.

Neben dem erfindungsgemäßen Polyesterol (P1) kann die Polyolkomponente (PK) weitere Verbindungen mit gegenüber Isocyanaten reaktiven Gruppen aufweisen, beispielsweise OHfunktionelle Verbindungen wie Polyesterole oder Polyetherole. Bevorzugt enthält die Polyolkomponenten als Komponente (b1.2) mindestens ein Polyesterpolyol (P2), das sich von dem Polyesterpolyol (P1) unterscheidet, und/oder als Komponente (b1.3) mindestens eine Verbindung ausgewählt aus der Gruppe bestehend aus Polyetherolen (P3), Verbindungen mit mindestens zwei gegenüber Isocyanaten reaktiven Gruppen, Kettenverlängerungsmitteln und Vernetzungsmitteln.

Darüber hinaus kann die Polyolkomponente (PK) als Komponente (b5) weitere Hilfsmittel und/oder Zusatzstoffe enthalten.

Geeignete Polyesterpolyole (P2), die sich von den Polyesterpolyolen (P1) unterscheiden, können beispielsweise aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-caprolacton oder Hydroxycarbonsäuren, z.B. ω-Hydroxycapronsäure.

Zur Herstellung der weiteren Polyesterpolyole (P2) kommen auch biobasierte Ausgangsstoffe und/oder deren Derivate in Frage, wie z. B. Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Im Allgemeinen beträgt das Massenverhältnis der Polyesterpolyole (P1) zu den Polyesterpolyolen (P2) mindestens 0,1, bevorzugt mindestens 0,5, besonders bevorzugt mindestens 1 und insbesondere mindestens 2.

In einer insbesondere bevorzugten Ausführungsform werden keine weiteren Polyesterpolyole (P2) mit umgesetzt.

Gemäß einer anderen Ausführungsform betrifft die vorliegende Erfindung demgemäß auch ein Verfahren zur Herstellung von Polyurethan-Hartschaumstoffen oder Polyisocyanurat-Hartschaumstoffen wie zuvor beschrieben, wobei neben dem Polyesterpolyol (P1) kein weiteres Polyesterpolyol (P2) in der Polyolkomponente (PK) enthalten ist.

Die Polyolkomponente (PK) kann weiter als Komponente (b1.3) mindestens eine Verbindung ausgewählt aus der Gruppe bestehend aus Polyetherolen (P3), Verbindungen mit mindestens zwei gegenüber Isocyanaten reaktiven Gruppen, Kettenverlängerungsmitteln und Vernetzungsmitteln enthalten.

Polyetherole, andere Verbindungen mit mindestens zwei gegenüber Isocyanaten reaktiven Gruppen, Kettenverlängerungsmittel und Vernetzungsmittel, die bei der Herstellung von Polyurethan- oder Polyisocyanurat-Hartschaumstoffen eingesetzt werden können, sind dem Fachmann an sich bekannt.

Bevorzugt wird als Komponente (b1.3) mindestens ein Polyetherpolyol (P3) verwendet. Die Polyetherole (P3) können die nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden zwei oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Die Polyetherpolyole (P3) sind vorzugsweise Polyoxypropylenpolyole und Polyoxyethylenpolyole, besonders bevorzugt Polyoxyethylenpolyole, und besitzen eine Funktionalität von vorzugsweise 2 bis 6, besonders bevorzugt 2 bis 4, insbesondere 2 bis 3 und im Speziellen 2 und zahlenmittlere Molekulargewichte von 150 g/mol bis 3000 g/mol, vorzugsweise 200 g/mol bis 2000 g/mol und insbesondere 250 g/mol bis 1000 g/mol.

Erfindungsgemäß können auch zwei oder mehr Polyetherpolyole (P3) eingesetzt werden.

In einer bevorzugten Ausführungsform der Erfindung wird ein alkoxyliertes Diol, bevorzugt ein ethoxyliertes Diol, beispielsweise ethoxylierter Ethylenglykol, als Polyetherpolyol (P3) mitverwendet, vorzugsweise handelt es sich dabei um Polyethylenglykol.

In einer speziellen Ausführungsform der Erfindung besteht die Komponente (b1.3) ausschließlich einem Polyetherpolyol (P3), bevorzugt ausschließlich aus Polyethylenglykol, vorzugsweise mit einem zahlenmittleren Molekulargewicht von 250 g/mol bis 1000 g/mol.

Demgemäß betrifft die vorliegende Erfindung gemäß einer weiteren Ausführungsform auch ein Verfahren zur Herstellung von Polyurethan-Hartschaumstoffen oder Polyisocyanurat- Hartschaumstoffen wie zuvor beschrieben, wobei die Polyetherpolyolkomponente gemäß (b1.3) ausschließlich Polyethylenglycol enthält, und keine weiteren Polyetherpolyole eingesetzt werden.

Im Allgemeinen beträgt der Anteil der Polyetherpolyole (P3) 0 bis 11 Gew.-%, bevorzugt 2 bis 9 Gew.-%, besonders bevorzugt 4 bis 8 Gew.-%, bezogen auf die Summe der Polyolkomponente (PK).

Im Allgemeinen ist das Massenverhältnis der Summe der Polyesterole (P1) und (P2) zu der Summe der eingesetzten Polyetherole (P3) mindestens 0,1, beispielsweise größer als 1, bevorzugt größer als 2, besonders bevorzugt größer als 5, insbesondere bevorzugt größer als 10 und speziell bevorzugt größer als 12.

Demgemäß betrifft die vorliegende Erfindung gemäß einer weiteren Ausführungsform auch ein Verfahren zur Herstellung von Polyurethan-Hartschaumstoffen oder Polyisocyanurat- Hartschaumstoffen wie zuvor beschrieben, wobei das Massenverhältnis der Summe der Polyesterole (P1) und (P2) zu der Summe der eingesetzten Polyetherole (P3) mindestens 0,1 beträgt.

Weiterhin ist im Allgemeinen das Massenverhältnis der Summe der Polyesterole (P1) und (P2) zu der Summe der eingesetzten Polyetherole (P3) kleiner als 80, bevorzugt kleiner als 40, besonders bevorzugt kleiner als 30, insbesondere bevorzugt kleiner als 20, speziell bevorzugt kleiner als 16 und im speziellen kleiner als 13.

Erfindungsgemäß enthält die Polyolkomponente (PK) mindestens ein Flammschutzmittel (b2). Als Flammschutzmittel (b2) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können erfindungsgemäß auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel weisen keine mit Isocyanatgruppen reaktiven Gruppen auf. Vorzugsweise sind die Flammschutzmittel bei Raumtemperatur flüssig. Besonders bevorzugt sind TCPP, DEEP, TEP, DMPP und DPK.

Im Allgemeinen beträgt der Anteil des Flammschutzmittels (b2), 2 bis 50 Gew.-%, bevorzugt 5 bis 30 Gew.-%, besonders bevorzugt 8 bis 25 Gew.-%, bezogen auf die Polyolkomponente (PK).

Demgemäß betrifft die vorliegende Erfindung gemäß einer weiteren Ausführungsform auch ein Verfahren zur Herstellung von Polyurethan-Hartschaumstoffen oder Polyisocyanurat- Hartschaumstoffen wie zuvor beschrieben, wobei die Flammschutzmittelkomponente (b2) ausschließlich aus Tris-(2-chlorpropyl)phosphat (TCPP) enthält, und keine weiteren Flammschutzmittel eingesetzt werden.

Erfindungsgemäß enthält die Polyolkomponente (PK) mindestens ein Treibmittel (b3). Zu Treibmitteln (b3), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den eingesetzten Isocyanaten inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen oder Ameisensäure. Vorzugsweise werden als physikalische Treibmittel Pentanisomere, bzw. Mischungen von Pentanisomeren verwendet.

Die chemischen Treibmittel können dabei alleine, d.h. ohne Zusatz von physikalischen Treibmitteln, oder zusammen mit physikalischen Treibmitteln verwendet werden. Vorzugsweise werden die chemischen Treibmittel zusammen mit physikalischen Treibmitteln verwendet, wobei die Verwendung von Ameisensäure-Wasser-Mischungen oder reiner Ameisensäure zusammen mit Pentanisomeren oder Gemischen aus Pentanisomeren bevorzugt sind.

Die Treibmittel sind entweder ganz oder teilweise in der Polyolkomponente (PK) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor und wird das physikalische Treibmittel (beispielsweise Pentan) und gegebenenfalls der Rest des chemischen Treibmittels "online" dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits üblicherweise im Polyolblend enthalten.

Die eingesetzte Menge des Treibmittels bzw. der Treibmittelmischung liegt im Allgemeinen bei 1 bis 45 Gew.-%, vorzugsweise 1 bis 30 Gew.-%, besonders bevorzugt 1,5 bis 20 Gew.-%, jeweils bezogen auf die Summe der Polyolkomponente (PK).

Dient Wasser, Ameisensäure oder eine Ameisensäure-Wasser-Mischung als Treibmittel, so wird es vorzugsweise der Polyolkomponente (PK) in einer Menge von 0,2 bis 20 Gew.-%, bezogen auf die Komponente (b1.1), zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Ameisensäure oder eine Ameisensäure-Wasser-Mischung in Kombination mit Pentan eingesetzt.

Demgemäß betrifft die vorliegende Erfindung gemäß einer weiteren Ausführungsform auch ein Verfahren zur Herstellung von Polyurethan-Hartschaumstoffen oder Polyisocyanurat- Hartschaumstoffen wie zuvor beschrieben, wobei die Treibmittelkomponente (b5) chemische und physikalische Treibmittel umfasst, wobei das chemische Treibmittel ausgewählt ist aus der Gruppe bestehend aus Wasser, Ameisensäure-Wasser-Mischungen und Ameisensäure, und das physikalische Treibmittel aus einem oder mehreren Pentanisomeren besteht.

Erfindungsgemäß enthält die Polyolkomponente (PK) mindestens einen Katalysator (b4). Erfindungsgemäß können Polyurethan-Hartschäume oder Polyisocyanurat-Hartschäume hergestellt werden. Geeignete Katalysatoren zur Herstellung der jeweiligen Schäume sind aus dem Stand der Technik prinzipiell bekannt.

Als Katalysatoren (b4) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Polyolkomponente (PK) mit der Komponente (A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo-(2,2,2)octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-teile Katalysator bzw. Katalysatorkombination, bezogen (d. h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Der Reaktionsmischung zur Herstellung der Polyurethan-Hartschaumstoffe können gegebenenfalls noch weitere Hilfsmittel und/oder Zusatzstoffe als Komponente (b5) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-teile, bezogen (d. h. gerechnet) auf 100 Gew.-teile der Polyolkomponente (PK), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Summe der Komponenten (A) und (PK), zugegeben, wobei jedoch der Gehalt an Matten, Vliesen und Geweben aus natürlichen und synthetischen Fasern Werte bis 80 Gew.-%, bezogen auf das Gewicht der Summe der Komponenten (A) und (PK), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Gegenstand der vorliegenden Erfindung ist außerdem eine Polyolkomponente (PK) enthaltend die vorgenannten Komponenten, wobei das Massenverhältnis der Summe der Polyesterole (P1) und gegebenenfalls (P2) zu dem eingesetzten Polyetherol (P3) mindestens 0,1, vorzugsweise mindestens 0,5, besonders bevorzugt mindestens 1, insbesondere mindestens 2 und spezifischer mindestens 5 beträgt.

Gemäß einem weiteren Aspekt betrifft die vorliegende Erfindung auch eine Polyolkomponente (PK) enthaltend
(b1.1) 50 bis 90 Gew.-% des Polyesterpolyols (P1) gemäß einer der Ausführungsformen 1 bis 8,
(b1.2) 0 bis 20 Gew.-% mindestens eines Polyesterpolyols (P2),
(b1.3) 2 bis 9 Gew.-% mindestens eines Polyetherpolyols (P3),
(b2) 5 bis 30 Gew.-% mindestens eines Flammschutzmittels,
(b3) 1 bis 30 Gew.-% mindestens eines Treibmittels,
(b4) 0,5 bis 10 Gew.-% mindestens eines Katalysators, und
(b5) 0,5 bis 20 Gew.-% weitere Hilfs- und Zusatzstoffe,
jeweils bezogen auf das Gesamtgewicht der Polyolkomponente (PK), wobei sich die Gew.-% zu 100 Gew.-% addieren, und wobei das Massenverhältnis der Summe der Polyesterole (P1) und (P2) zu der Summe der eingesetzten Polyetherole (P3) mindestens 2 beträgt.

Gemäß einem alternativen Aspekt betrifft die vorliegende Erfindung auch eine Polyolkomponente (PK*) enthaltend
(b1.1) 10 bis 90 Gew.-% des Polyesterpolyols (P1) gemäß einer der Ausführungsformen 1 bis 8,
(b1.2) 0 bis 60 Gew.-% mindestens eines Polyesterpolyols (P2),
(b1.3) 0,1 bis 11 Gew.-% mindestens eines Polyetherpolyols (P3),
(b2) 2 bis 50 Gew.-% mindestens eines Flammschutzmittels,
(b3) 1 bis 45 Gew.-% mindestens eines Treibmittels,
(b4) 0,5 bis 10 Gew.-% mindestens eines Katalysators, und
(b5) 0,5 bis 20 Gew.-% weitere Hilfs- und Zusatzstoffe,
jeweils wie vorstehend definiert und jeweils bezogen auf das Gesamtgewicht der Polyolkomponente (PK*), wobei sich die Gew.-% zu 100 Gew.-% addieren, und wobei das Massenverhältnis der Summe der Polyesterole (P1) und (P2) zu der Summe der eingesetzten Polyetherole (P3) mindestens 1 beträgt.

Gemäß einem weiteren Aspekt betrifft die vorliegende Erfindung auch eine Polyolkomponente (PK**) bestehend aus
(b1.1) 50 bis 90 Gew.-% des Polyesterpolyols (P1) gemäß einer der Ausführungsformen 1 bis 8,
(b1.2) 0 bis 20 Gew.-% mindestens eines Polyesterpolyols (P2),
(b1.3) 2 bis 9 Gew.-% mindestens eines Polyetherpolyols (P3),
(b2) 5 bis 30 Gew.-% mindestens eines Flammschutzmittels,
(b3) 1 bis 30 Gew.-% mindestens eines Treibmittels,
(b4) 0,5 bis 10 Gew.-% mindestens eines Katalysators, und
(b5) 0,5 bis 20 Gew.-% weitere Hilfs- und Zusatzstoffe,
jeweils bezogen auf das Gesamtgewicht der Polyolkomponente (PK**), wobei sich die Gew.-% zu 100 Gew.-% addieren, und wobei das Massenverhältnis der Summe der Polyesterole (P1) und (P2) zu der Summe der eingesetzten Polyetherole (P3) mindestens 2 beträgt.

Weiter betrifft die vorliegende Erfindung auch eine Polyolkomponente (PK***) bestehend aus
(b1.1) 10 bis 90 Gew.-% des Polyesterpolyols (P1) gemäß einer der Ausführungsformen 1 bis 8,
(b1.2) 0 bis 60 Gew.-% mindestens eines Polyesterpolyols (P2),
(b1.3) 0,1 bis 11 Gew.-% mindestens eines Polyetherpolyols (P3),
(b2) 2 bis 50 Gew.-% mindestens eines Flammschutzmittels,
(b3) 1 bis 45 Gew.-% mindestens eines Treibmittels,
(b4) 0,5 bis 10 Gew.-% mindestens eines Katalysators, und
(b5) 0,5 bis 20 Gew.-% weitere Hilfs- und Zusatzstoffe,
jeweils wie vorstehend definiert und jeweils bezogen auf das Gesamtgewicht der Polyolkomponente (PK***), wobei sich die Gew.-% zu 100 Gew.-% addieren, und wobei das Massenverhältnis der Summe der Polyesterole (P1) und (P2) zu der Summe der eingesetzten Polyetherole (P3) mindestens 1 beträgt.

Weiterhin ist das erfindungsgemäße Massenverhältnis der Summe der Summe der Polyesterole (P1) und (P2) zu der Summe der eingesetzten Polyetherole (P3) in den erfindungsgemäßen Polyolkomponenten vorzugsweise kleiner als 80, bevorzugt kleiner als 40, besonders bevorzugt kleiner als 30, insbesondere bevorzugt kleiner als 20, speziell bevorzugt kleiner als 16 und im speziellen kleiner als 13.

Zur Herstellung der erfindungsgemäßen Polyurethan-Hartschaumstoffe werden die Komponente (A) und die Polyolkomponente (PK) in solchen Mengen vermischt, dass das Äquivalenzverhältnis von NCO-Gruppen der Di- oder Polyisocyanate zur Summe der reaktiven Wasserstoffatome der Komponenten (PK) größer als 1, vorzugsweise größer als 1,2, besonders bevorzugt größer als 1,5, spezifischer größer als 1,8, noch spezieller größer als 2, spezifischer größer als 2,2, im Speziellen größer als 2,5 und insbesondere größer als 3 ist. Weiterhin bevorzugt ist das Äquivalenzverhältnis von NCO-Gruppen zur Summe der reaktiven Wasserstoffatome kleiner als 10, vorzugsweise kleiner als 8, besonders bevorzugt kleiner als 7, spezifischer kleiner als 6, noch spezieller kleiner als 5, spezifischer kleiner als 4,5, im Speziellen kleiner als 4 und insbesondere kleiner als 3,5 ist.

Weitere Gegenstände der vorliegenden Erfindung sind Polyurethan-Hartschaumstoffe und Polyisocyanurat-Hartschaumstoffe, erhältlich oder erhalten nach dem erfindungsgemäßen Verfahren sowie deren Verwendung zur Herstellung von Sandwich-Elementen mit starren oder flexiblen Deckschichten.

Die vorliegende Erfindung betrifft gemäß einem weiteren Aspekt Polyurethan-Hartschaumstoffe oder Polyisocyanurat-Hartschaumstoffe, erhältlich oder erhalten nach einem Verfahren wie zuvor beschrieben. Demgemäß betrifft die vorliegende Erfindung Polyurethan-Hartschaumstoffe oder Polyisocyanurat-Hartschaumstoffe, erhältlich oder erhalten nach einem Verfahren zur Herstellung von Polyurethan-Hartschaumstoffen oder Polyisocyanurat- Hartschaumstoffen umfassend die Umsetzung von
A) einer Komponente (A) enthaltend mindestens eine Verbindung ausgewählt aus der Gruppe bestehend aus organischen Diisocyanaten, modifizierten organischen Diisocyanaten, organischen Polyisocyanaten und modifizierten organischen Polyisocyanaten, mit
B) einer Polyolkomponente (PK) enthaltend
   (b1.1) mindestens ein Polyesterpolyol (P1) wie zuvor beschrieben,
   (b2) mindestens ein Flammschutzmittel,
   (b3) mindestens ein Treibmittel,
   (b4) mindestens einen Katalysator.

Insbesondere betrifft die vorliegende Erfindung Polyurethan-Hartschaumstoffe oder Polyisocyanurat-Hartschaumstoffe, erhältlich oder erhalten nach einem Verfahren zur Herstellung von Polyurethan-Hartschaumstoffen oder Polyisocyanurat- Hartschaumstoffen umfassend die Umsetzung von
A) einer Komponente (A) enthaltend mindestens eine Verbindung ausgewählt aus der Gruppe bestehend aus organischen Diisocyanaten, modifizierten organischen Diisocyanaten, organischen Polyisocyanaten und modifizierten organischen Polyisocyanaten, mit
B) einer Polyolkomponente (PK) enthaltend
   (b1.1) mindestens ein Polyesterpolyol (P1) wie zuvor beschrieben,
   (b2) mindestens ein Flammschutzmittel,
   (b3) mindestens ein Treibmittel,
   (b4) mindestens einen Katalysator.
   wobei die Polyolkomponente (PK) eine oder mehrere der folgenden Verbindungen enthält
   (b1.2) mindestens ein Polyesterpolyol (P2), das sich von dem Polyesterpolyol (P1) unterscheidet,
   (b1.3) mindestens eine Verbindung ausgewählt aus der Gruppe bestehend aus Polyetherolen (P3), Verbindungen mit mindestens zwei gegenüber Isocyanaten reaktiven Gruppen, Kettenverlängerungsmitteln und Vernetzungsmitteln,
   (b5) weitere Hilfsmittel und/oder Zusatzstoffe.

Weiter betrifft die vorliegende Erfindung auch die Verwendung eines Polyesterpolyols (P1) wie zuvor beschrieben oder einer Polyolkomponente (PK) wie zuvor beschrieben zur Herstellung von Polyurethan-Hartschaumstoffen oder Polyisocyanurat-Hartschaumstoffen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Polyesterpolyol (P1), erhältlich oder erhalten durch Veresterung der Komponenten (i) bis (v)
   (i) 10 bis 70 Mol-% mindestens einer Verbindung aus der Gruppe bestehend aus Terephthalsäure (TPA), Dimethylterephthalat (DMT), Polyethylenterephthalat (PET), Phthalsäureanhydrid (PSA), Phthalsäure und Isophthalsäure,
   (ii) 0,1 bis 30 Mol-% einer oder mehrerer Fettsäuren und/oder Fettsäurederivate,
   (iii) 10 bis 70 Mol-% eines oder mehrerer aliphatischer oder cycloaliphatischer Diole mit 2 bis 18 C-Atomen oder Alkoxylaten davon,
   (iv) 5 bis 70 Mol-% eines Polyetherpolyols, hergestellt durch die Alkoxylierung eines aromatischen Startermoleküls mit einer Funktionalität von größer oder gleich 2,
   (v) 0 bis 70 Mol-% eines von Komponente (iv) verschiedenen Tri- oder Polyols, jeweils bezogen auf die Gesamtmenge der Komponenten (i) bis (v), wobei sich die Mengen der eingesetzten Komponenten (i) bis (v) zu 100 Mol-% addieren.
2. Polyesterpolyol (P1) gemäß Ausführungsform 1, wobei die Komponenten (i) bis (v) in folgenden Mengen eingesetzt werden
   Komponente (i) in einer Menge im Bereich von 25 bis 40 Mol-%,
   Komponente (ii) in einer Menge im Bereich von 8 bis 14 Mol-%,
   Komponente (iii) in einer Menge im Bereich von 25 bis 55 Mol-%,
   Komponente (iv) in einer Menge im Bereich von 12 bis 18 Mol-%, und
   Komponente (v) in einer Menge im Bereich von 0 bis 18 Mol-%,
   jeweils bezogen auf die Gesamtmenge der Komponenten (i) bis (v), wobei sich die Mengen der eingesetzten Komponenten (i) bis (v) zu 100 Mol-% addieren.
3. Polyesterpolyol (P1) gemäß Ausführungsform 1 oder 2, wobei die Komponente (i) ausgewählt ist aus der Gruppe bestehend aus Terephthalsäure und Dimethylterephthalat (DMT).
4. Polyesterpolyol (P1) gemäß einer der Ausführungsformen 1 bis 3, wobei die Komponente (ii) ausgewählt ist aus der Gruppe bestehend aus Ölsäure, Sojaöl, Rapsöl und Talg.
5. Polyesterpolyol (P1) gemäß einer der Ausführungsformen 1 bis 4, wobei die Komponente (iii) ausgewählt ist aus der Gruppe bestehend aus Diethylenglykol (DEG) und Monoethylenglykol (MEG).
6. Polyesterpolyol (P1) gemäß einer der Ausführungsformen 1 bis 5, wobei die Komponente (iv) erhältlich oder erhalten ist durch Ethoxylierung eines aromatischen Polyols mit einer Funktionalität von größer als 2.
7. Polyesterpolyol (P1) gemäß einer der Ausführungsformen 1 bis 6, wobei die Komponente (iv) erhältlich oder erhalten ist durch Ethoxylierung einer Zusammensetzung bestehend aus Toluylendiamin-Isomeren, und der Gehalt der Zusammensetzung an Toluylendiamin-Isomeren mit einer vizinalen Stellung der beiden Aminogruppen mindestens 90 Gew.-% ist.
8. Polyesterpolyol (P1) gemäß einer der Ausführungsformen 1 bis 7, wobei das Polyesterpolyol (P1) ein zahlenmittleres Molekulargewicht im Bereich von 450 g/mol bis 800 g/mol aufweist.
9. Verfahren zur Herstellung von Polyurethan-Hartschaumstoffen oder Polyisocyanurat-Hartschaumstoffen umfassend die Umsetzung von
   A) einer Komponente (A) enthaltend mindestens eine Verbindung ausgewählt aus der Gruppe bestehend aus organischen Diisocyanaten, modifizierten organischen Diisocyanaten, organischen Polyisocyanaten und modifizierten organischen Polyisocyanaten, mit
   B) einer Polyolkomponente (PK) enthaltend
      (b1.1) mindestens ein Polyesterpolyol (P1) gemäß einer der Ausführungsformen 1 bis 8,
      (b2) mindestens ein Flammschutzmittel,
      (b3) mindestens ein Treibmittel,
      (b4) mindestens einen Katalysator.
10. Verfahren gemäß Ausführungsform 9, wobei die Polyolkomponente (PK) eine oder mehrere der folgenden Verbindungen enthält
   (b1.2) mindestens ein Polyesterpolyol (P2), das sich von dem Polyesterpolyol (P1) unterscheidet,
   (b1.3) mindestens eine Verbindung ausgewählt aus der Gruppe bestehend aus Polyetherolen (P3), Verbindungen mit mindestens zwei gegenüber Isocyanaten reaktiven Gruppen, Kettenverlängerungsmitteln und Vernetzungsmitteln,
   (b5) weitere Hilfsmittel und/oder Zusatzstoffe.
11. Verfahren gemäß Ausführungsform 10, dadurch gekennzeichnet, dass das Massenverhältnis der Summe der Polyesterole (P1) und (P2) zu der Summe der eingesetzten Polyetherole (P3) mindestens 0,1 beträgt.
12. Verfahren gemäß Ausführungsform 10 oder 11, wobei neben dem Polyesterpolyol (P1) kein weiteres Polyesterpolyol (P2) in der Polyolkomponente (PK) enthalten ist.
13. Verfahren gemäß einer der Ausführungsformen 10 bis 12, wobei die Polyetherpolyolkomponente gemäß (b1.3) ausschließlich Polyethylenglycol enthält, und keine weiteren Polyetherpolyole eingesetzt werden.
14. Verfahren gemäß einer der Ausführungsformen 9 bis 13, wobei die Flammschutzmittelkomponente (b2) ausschließlich aus Tris-(2-chlorpropyl)phosphat (TCPP) enthält, und keine weiteren Flammschutzmittel eingesetzt werden.
15. Verfahren gemäß einer der Ausführungsformen 9 bis 14, wobei die Treibmittelkomponente (b5) chemische und physikalische Treibmittel umfasst, wobei das chemische Treibmittel ausgewählt ist aus der Gruppe bestehend aus Wasser, Ameisensäure-Wasser-Mischungen und Ameisensäure, und das physikalische Treibmittel aus einem oder mehreren Pentanisomeren besteht.
16. Polyolkomponente (PK) enthaltend
   (b1.1) 50 bis 90 Gew.-% des Polyesterpolyols (P1) gemäß einer der Ausführungsformen 1 bis 8,
   (b1.2) 0 bis 20 Gew.-% mindestens eines Polyesterpolyols (P2),
   (b1.3) 2 bis 9 Gew.-% mindestens eines Polyetherpolyols (P3),
   (b2) 5 bis 30 Gew.-% mindestens eines Flammschutzmittels,
   (b3) 1 bis 30 Gew.-% mindestens eines Treibmittels,
   (b4) 0,5 bis 10 Gew.-% mindestens eines Katalysators, und
   (b5) 0,5 bis 20 Gew.-% weitere Hilfs- und Zusatzstoffe,
   jeweils bezogen auf das Gesamtgewicht der Polyolkomponente (PK), wobei sich die Gew.-% zu 100 Gew.-% addieren, und wobei das Massenverhältnis der Summe der Polyesterole (P1) und (P2) zu der Summe der eingesetzten Polyetherole (P3) mindestens 2 beträgt.
17. Polyurethan-Hartschaumstoffe oder Polyisocyanurat-Hartschaumstoffe, erhältlich oder erhalten nach einem Verfahren gemäß einer der Ausführungsformen 9 bis 15.
18. Verwendung eines Polyesterpolyols (P1) nach einer der Ausführungsformen 1 bis 8 oder einer Polyolkomponente (PK) nach Ausführungsform 16 zur Herstellung von Polyurethan-Hartschaumstoffen oder Polyisocyanurat-Hartschaumstoffen.

Die nachfolgenden Beispiele dienen der Veranschaulichung der Erfindung, sind aber in keiner Weise einschränkend hinsichtlich des Gegenstands der vorliegenden Erfindung.

### Beispiele

### 1. Es wurden die nachstehenden Polyole und Katalysatormischungen eingesetzt:

### 1.1 Polyesterol 1 (Vergleichsmuster):

Veresterungsprodukt von Terephthalsäure (32,5 Mol-%), Ölsäure (9,0 Mol-%), Diethylenglykol (26,0 Mol-%) und einem Polyether (32,5 Mol-%) auf Basis von Glycerin und Ethylenoxid mit einer OH-Funktionalität von 3 und einer Hydroxylzahl von 705 mg KOH/g. Das Polyesterol weist eine Hydroxylfunktionalität von 2,9 und eine Hydroxylzahl von 250 mg KOH/g auf.

### 1.2 Polyesterol 2 (erfindungsgemäß):

Veresterungsprodukt von Terephthalsäure (30,3 Mol-%), Ölsäure (10,6 Mol-%), Diethylenglykol (40,9 Mol-%) und einem Polyether (18,2 Mol-%) auf Basis von Toluylendiamin (TDA) mit einem Gehalt an Isomeren mit einer vizinalen Stellung der beiden Amingruppen zueinander von 98 Gew.-% und Ethylenoxid mit einer OH-Funktionalität von 4 und einer Hydroxylzahl von 452 mg KOH/g. Das Polyesterol weist eine Hydroxylfunktionalität von 2,9 und eine Hydroxylzahl von 241 mg KOH/g auf.

### 1.3 Polyetherpolyol 1:

Polyetherol aus ethoxyliertem Ethylenglykol mit einer Hydroxyfunktionalität von 2 und einer Hydroxyzahl von 190 mg KOH/g

### 1.4 Katalysatormischung 1:

47 Gew.-% Kaliumacetat, 50,15 Gew.-% Monoethylenglycol und 2,85 Gew.-% Wasser.

### 1.5 Katalysatormischung 2:

70 Gew.-% Bis(2-Dimethylaminoethyl)ether und 30 Gew.-% Dipropylenglycol

### 2. Vergleichsbeispiel 1

Aus 80,0 Gew.-Teilen des "Polyesterol 1", 8,0 Gew.-Teilen des "Polyetherpolyols 1", 10,0 Gew.-Teilen Tris-2-chlorisopropylphosphat (TCPP), und 2,0 Gew.-Teilen silikonhaltiger Schaumstabilisator (Tegostab® B 8443 der Firma Goldschmidt) wurde durch Vermischen eine Polyolkomponente hergestellt.

Die Polyolkomponente war bei 20 °C phasenstabil. Diese wurde mit 200 Gew.-Teilen eines Polymer-MDI mit einem NCO-Gehalt von 31,5 Gew.-% (Lupranat® M50 der BASF SE) in Anwesenheit von 8 Gew.-Teilen n-Pentan (8,0 Gew.-Teile), 2 Gew.- Teilen der "Katalysatormischung 1", unter Variation der "Katalysatormischung 2" und Wasser umgesetzt, so dass die Abbindezeit 42 ± 1 Sekunde betrug und der resultierende Schaum eine Dichte von 39,0 ± 1 kg/m³ aufwies.

### 3. Beispiel 1

Aus 80,0 Gew.-Teilen des "Polyesterol 2", 8,0 Gew.-Teilen des "Polyetherpolyols 1", 10,0 Gew.-Teilen Tris-2-chlorisopropylphosphat (TCPP), und 2,0 Gew.-Teilen silikonhaltiger Schaumstabilisator (Tegostab® B 8443 der Firma Goldschmidt) wurde durch Vermischen eine Polyolkomponente hergestellt.

Die Polyolkomponente war bei 20 °C phasenstabil. Diese wurde mit 200 Gew.-Teilen eines Polymer-MDI mit einem NCO-Gehalt von 31,5 Gew.-% (Lupranat® M50 der BASF SE) in Anwesenheit von 8 Gew.-Teilen n-Pentan (8,0 Gew.-Teile), 2 Gew.- Teilen der "Katalysatormischung 1", unter Variation der "Katalysatormischung 2" und Wasser umgesetzt, so dass die Abbindezeit 42 ± 1 Sekunde betrug und der resultierende Becherschaum eine Dichte von 39,0 ± 1 kg/m³ aufwies.

### 4. Messung der mittlere Wärmefreisetzung und Ermittlung des Maximalwerts der über die Zeit gemittelten Wärmefieisetzungsrate mittels Cone Kalorimetrie

Die zur Cone Kalorimetrie genutzten Prüfkörper wurden an identischen Stellen aus Blockschäumen ausgeschnitten. Das zur Herstellung der Blockschäume verwendete Reaktionsgemisch führte in Becherschäumen zu den oben genannten Abbindezeiten von 42 ± 1 Sekunde und den Becherschaumdichten von 39,0 ± 1 kg/m³ und wurde in identischen Mengen [± 5 g] in einer 25 cm langen, 15 cm breiten und 21 cm hohen Blockform zur Reaktion gebracht.

Die Bestimmung der Wärmefreisetzung und des Masseverlusts erfolgte mit Hilfe der Cone Kalorimetrie analog ISO 5660-1 Teil 1. Die Prüfkörper wurden hierzu bei horizontaler Ausrichtung mit einer Strahlungsintensität von 50 kW/m² geprüft. Die Ergebnisse sind in Tabelle 1 zusammengefasst.

**Tabelle 1**

| | | | Vergleichsbeispiel 1 | Beispiel 1 |
|---|---|---|---|---|
| Polyesterpolyol 1 | | Gew.-Teile | 80 | |
| Polyesterpolyol 2 | | Gew.-Teile | | 80 |
| Tris-2-chlorisopropylphosphat | | Gew.-Teile | 10 | 10 |
| Polyetherpolyol 1 | | Gew.-Teile | 8 | 8 |
| Tegostab® B 8443 | | Gew.-Teile | 2 | 2 |
| | | | | |
| Lupranat® M50 | | Gew.-Teile | 200 | 200 |
| Katalysatormischung 1 | | Gew.-Teile | 2 | 2 |
| Katalysatormischung 2 | | Gew.-Teile | 2 | 1,8 |
| Wasser | | Gew.-Teile | 2 | 1,8 |
| N-Pentan | | Gew.-Teile | 8 | 8 |
| | | | | |
| Becherdichte | | kg/m³ | 38,9 | 38,8 |
| Abbindezeit | | S | 42 | 41 |
| | | | | |
| Zündung | | S | 3 | 3 |
| | | | | |
| Mittlere Wärmefreisetzung | 60 s nach Zündung | kW/m² | 75,2 | 67,9 |
| | 180 s nach Zündung | kW/m² | 59,5 | 46,8 |
| | 300 s nach Zündung | kW/m² | 47,7 | 39,1 |
| | 360 s nach Zündung | kW/m² | 44,2 | 35,6 |
| | | | | |
| MARHE | Nach Zündung | MJ/m² | 74,6 | 71,7 |

Beide Schäume zünden 3 Sekunden nach Beginn der Prüfung. Überraschenderweise zeigt der Schaum aus Beispiel 1 gegenüber dem Schaum aus Vergleichsbeispiel 1 sowohl nach 1, 3, 5 und 6 Minuten eine stets signifikant geringere mittlere Wärmefreisetzung.

Ebenso ist der Maximalwert der über die Zeit gemittelten Wärmefreisetzungsrate [MARHE] bei Beispiel 1 geringer als bei Vergleichsbeispiel 1.

Sowohl die geringeren mittleren Wärmefreisetzungswerte, als auch der geringere MARHE Wert belegt, dass der Schaum aus Beispiel 1 dem Schaum aus Vergleichsbeispiel 1 im Brandfall deutlich überlegen ist.

## Patentansprüche

1. Polyesterpolyol (P1), erhältlich oder erhalten durch Veresterung der Komponenten (i) bis (v)
(i) 10 bis 70 Mol-% mindestens einer Verbindung aus der Gruppe bestehend aus Terephthalsäure (TPA), Dimethylterephthalat (DMT), Polyethylenterephthalat (PET), Phthalsäureanhydrid (PSA), Phthalsäure und Isophthalsäure,
(ii) 0,1 bis 30 Mol-% einer oder mehrerer Fettsäuren und/oder Fettsäurederivate,
(iii) 10 bis 70 Mol-% eines oder mehrerer aliphatischer oder cycloaliphatischer Diole mit 2 bis 18 C-Atomen oder Alkoxylaten davon,
(iv) 5 bis 70 Mol-% eines Polyetherpolyols, hergestellt durch die Alkoxylierung eines aromatischen Startermoleküls mit einer Funktionalität von größer oder gleich 2,
(v) 0 bis 70 Mol-% eines von Komponente (iv) verschiedenen Tri- oder Polyols,
jeweils bezogen auf die Gesamtmenge der Komponenten (i) bis (v), wobei sich die Mengen der eingesetzten Komponenten (i) bis (v) zu 100 Mol-% addieren.

2. Polyesterpolyol (P1) gemäß Anspruch 1, wobei die Komponenten (i) bis (v) in folgenden Mengen eingesetzt werden
Komponente (i) in einer Menge im Bereich von 25 bis 40 Mol-%,
Komponente (ii) in einer Menge im Bereich von 8 bis 14 Mol-%,
Komponente (iii) in einer Menge im Bereich von 25 bis 55 Mol-%,
Komponente (iv) in einer Menge im Bereich von 12 bis 18 Mol-%, und
Komponente (v) in einer Menge im Bereich von 0 bis 18 Mol-%,
jeweils bezogen auf die Gesamtmenge der Komponenten (i) bis (v), wobei sich die Mengen der eingesetzten Komponenten (i) bis (v) zu 100 Mol-% addieren.

3. Polyesterpolyol (P1) gemäß Anspruch 1 oder 2, wobei die Komponente (i) ausgewählt ist aus der Gruppe bestehend aus Terephthalsäure und Dimethylterephthalat (DMT).

4. Polyesterpolyol (P1) gemäß einem der Ansprüche 1 bis 3, wobei die Komponente (ii) ausgewählt ist aus der Gruppe bestehend aus Ölsäure, Sojaöl, Rapsöl und Talg.

5. Polyesterpolyol (P1) gemäß einem der Ansprüche 1 bis 4, wobei die Komponente (iii) ausgewählt ist aus der Gruppe bestehend aus Diethylenglykol (DEG) und Monoethylenglykol (MEG).

6. Polyesterpolyol (P1) gemäß einem der Ansprüche 1 bis 5, wobei die Komponente (iv) erhältlich oder erhalten ist durch Ethoxylierung eines aromatischen Polyols mit einer Funktionalität von größer als 2.

7. Polyesterpolyol (P1) gemäß einem der Ansprüche 1 bis 6, wobei die Komponente (iv) erhältlich oder erhalten ist durch Ethoxylierung einer Zusammensetzung bestehend aus Toluylendiamin-Isomeren, und der Gehalt der Zusammensetzung an Toluylendiamin-Isomeren mit einer vizinalen Stellung der beiden Aminogruppen mindestens 90 Gew.-% ist.

8. Polyesterpolyol (P1) gemäß einem der Ansprüche 1 bis 7, wobei das Polyesterpolyol (P1) ein zahlenmittleres Molekulargewicht im Bereich von 450 g/mol bis 800 g/mol aufweist.

9. Verfahren zur Herstellung von Polyurethan-Hartschaumstoffen oder Polyisocyanurat-Hartschaumstoffen umfassend die Umsetzung von
A) einer Komponente (A) enthaltend mindestens eine Verbindung ausgewählt aus der Gruppe bestehend aus organischen Diisocyanaten, modifizierten organischen Diisocyanaten, organischen Polyisocyanaten und modifizierten organischen Polyisocyanaten, mit
B) einer Polyolkomponente (PK) enthaltend
(b1.1) mindestens ein Polyesterpolyol (P1) gemäß einem der Ansprüche 1 bis 8,
(b2) mindestens ein Flammschutzmittel,
(b3) mindestens ein Treibmittel,
(b4) mindestens einen Katalysator.

10. Verfahren gemäß Anspruch 9, wobei die Polyolkomponente (PK) eine oder mehrere der folgenden Verbindungen enthält
(b1.2) mindestens ein Polyesterpolyol (P2), das sich von dem Polyesterpolyol (P1) unterscheidet,
(b1.3) mindestens eine Verbindung ausgewählt aus der Gruppe bestehend aus Polyetherolen (P3), Verbindungen mit mindestens zwei gegenüber Isocyanaten reaktiven Gruppen, Kettenverlängerungsmitteln und Vernetzungsmitteln,
(b5) weitere Hilfsmittel und/oder Zusatzstoffe.

11. Verfahren gemäß Anspruch 10, **dadurch gekennzeichnet, dass** das Massenverhältnis der Summe der Polyesterole (P1) und (P2) zu der Summe der eingesetzten Polyetherole (P3) mindestens 0,1 beträgt.

12. Verfahren gemäß Anspruch 10 oder 11 wobei neben dem Polyesterpolyol (P1) kein weiteres Polyesterpolyol (P2) in der Polyolkomponente (PK) enthalten ist.

13. Verfahren gemäß einem der Ansprüche 10 bis 12, wobei die Polyetherpolyolkomponente gemäß (b1.3) ausschließlich Polyethylenglycol enthält, und keine weiteren Polyetherpolyole eingesetzt werden.

14. Verfahren gemäß einem der Ansprüche 9 bis 13, wobei die Flammschutzmittelkomponente (b2) ausschließlich aus Tris-(2-chlorpropyl)phosphat (TCPP) enthält, und keine weiteren Flammschutzmittel eingesetzt werden.

15. Verfahren gemäß einem der Ansprüche 9 bis 14, wobei die Treibmittelkomponente (b5) chemische und physikalische Treibmittel umfasst, wobei das chemische Treibmittel ausgewählt ist aus der Gruppe bestehend aus Wasser, Ameisensäure-Wasser-Mischungen und Ameisensäure, und das physikalische Treibmittel aus einem oder mehreren Pentanisomeren besteht.

16. Polyolkomponente (PK) enthaltend
(b1.1) 50 bis 90 Gew.-% des Polyesterpolyols (P1) gemäß einem der Ansprüche 1 bis 8,
(b1.2) 0 bis 20 Gew.-% mindestens eines Polyesterpolyols (P2),
(b1.3) 2 bis 9 Gew.-% mindestens eines Polyetherpolyols (P3),
(b2) 5 bis 30 Gew.-% mindestens eines Flammschutzmittels,
(b3) 1 bis 30 Gew.-% mindestens eines Treibmittels,
(b4) 0,5 bis 10 Gew.-% mindestens eines Katalysators, und
(b5) 0,5 bis 20 Gew.-% weitere Hilfs- und Zusatzstoffe,
jeweils bezogen auf das Gesamtgewicht der Polyolkomponente (PK), wobei sich die Gew.-% zu 100 Gew.-% addieren, und wobei das Massenverhältnis der Summe der Polyesterole (P1) und (P2) zu der Summe der eingesetzten Polyetherole (P3) mindestens 2 beträgt.

17. Polyurethan-Hartschaumstoffe oder Polyisocyanurat-Hartschaumstoffe, erhältlich oder erhalten nach einem Verfahren gemäß einem der Ansprüche 9 bis 15.

18. Verwendung eines Polyesterpolyols (P1) nach einem der Ansprüche 1 bis 8 oder einer Polyolkomponente (PK) nach Anspruch 16 zur Herstellung von Polyurethan-Hartschaumstoffen oder Polyisocyanurat-Hartschaumstoffen.

## Claims

1. A polyester polyol (P1) obtainable or obtained by esterification of components (i) to (v)
(i) 10 to 70 mol% of at least one compound from the group consisting of terephthalic acid (TPA), dimethyl terephthalate (DMT), polyethylene terephthalate (PET), phthalic anhydride (PA), phthalic acid and isophthalic acid,
(ii) 0.1 to 30 mol% of one or more fatty acids and/or fatty acid derivatives,
(iii) 10 to 70 mol% of one or more aliphatic or cycloaliphatic diols having 2 to 18 carbon atoms or alkoxylates thereof,
(iv) 5 to 70 mol% of a polyether polyol prepared by alkoxylating an aromatic starter molecule having a functionality of not less than 2,
(v) 0 to 70 mol% of a tri- or polyol other than component (iv),
all based on the total amount of components (i) to (v), wherein the amounts used of components (i) to (v) add up to 100 mol%.

2. The polyester polyol (P1) according to claim 1 wherein said components (i) to (v) are used in the following amounts:
component (i) in an amount from 25 to 40 mol%,
component (ii) in an amount from 8 to 14 mol%,
component (iii) in an amount from 25 to 55 mol%,
component (iv) in an amount from 12 to 18 mol%, and
component (v) in an amount from 0 to 18 mol%,
all based on the total amount of components (i) to (v), wherein the amounts used of components (i) to (v) add up to 100 mol%.

3. The polyester polyol (P1) according to claim 1 or 2 wherein said component (i) is selected from the group consisting of terephthalic acid and dimethyl terephthalate (DMT).

4. The polyester polyol (P1) according to any of claims 1 to 3 wherein said component (ii) is selected from the group consisting of oleic acid, soya oil, rapeseed oil and tallow.

5. The polyester polyol (P1) according to any of claims 1 to 4 wherein said component (iii) is selected from the group consisting of diethylene glycol (DEG) and monoethylene glycol (MEG).

6. The polyester polyol (P1) according to any of claims 1 to 5 wherein said component (iv) is obtainable or obtained by ethoxylating an aromatic polyol having a functionality of greater than 2.

7. The polyester polyol (P1) according to any of claims 1 to 6 wherein said component (iv) is obtainable or obtained by ethoxylating a composition consisting of tolylenediamine isomers and comprising not less than 90 wt% of tolylenediamine isomers having a vicinal position for the two amino groups.

8. The polyester polyol (P1) according to any of claims 1 to 7 wherein said polyester polyol (P1) has a number average molecular weight in the range from 450 g/mol to 800 g/mol.

9. A process for producing rigid polyurethane foams or rigid polyisocyanurate foams which comprises the reaction of
A) a component (A) comprising at least one compound selected from the group consisting of organic diisocyanates, modified organic diisocyanates, organic polyisocyanates and modified organic polyisocyanates, with
B) a polyol component (PK) comprising
(b1.1) at least one polyester polyol (P1) according to any of claims 1 to 8,
(b2) at least one flame retardant,
(b3) at least one blowing agent,
(b4) at least one catalyst.

10. The process according to claim 9 wherein said polyol component (PK) comprises one or more of the following compounds:
(b1.2) at least one polyester polyol (P2) other than said polyester polyol (P1),
(bl.3) at least one compound selected from the group consisting of polyetherols (P3), compounds having two or more isocyanate-reactive groups, chain-extending agents and crosslinking agents,
(b5) further auxiliaries and/or admixture agents.

11. The process according to claim 10 wherein the mass ratio of the sum total of polyesterols (P1) and (P2) to the sum total used of polyetherols (P3) is not less than 0.1.

12. The process according to claim 10 or 11 wherein said polyol component (PK) comprises no further polyester polyol (P2) in addition to said polyester polyol (P1).

13. The process according to any of claims 10 to 12 wherein the polyether polyol component of (b1.3) comprises polyethylene glycol only and no further polyether polyols are used.

14. The process according to any of claims 9 to 13 wherein the flame retardant component (b2) comprises tris(2-chloropropyl) phosphate (TCPP) only and no further flame retardants are used.

15. The process according to any of claims 9 to 14 wherein the blowing agent component (b5) comprises chemical and physical blowing agents, wherein the chemical blowing agent is selected from the group consisting of water, formic acid-water mixtures and formic acid and the physical blowing agent consists of one or more pentane isomers.

16. A polyol component (PK) comprising
(b1.1) 50 to 90 wt% of polyester polyol (P1) according to any of claims 1 to 8,
(b1.2) 0 to 20 wt% of at least one polyester polyol (P2),
(b1.3) 2 to 9 wt% of at least one polyether polyol (P3),
(b2) 5 to 30 wt% of at least one flame retardant,
(b3) 1 to 30 wt% of at least one blowing agent,
(b4) 0.5 to 10 wt% of at least one catalyst, and
(b5) 0.5 to 20 wt% of further auxiliary and
admixture agents,
all based on the total weight of polyol component (PK), wherein the weight percentages add up to 100 wt%, and wherein the mass ratio of the sum total of polyesterols (P1) and (P2) to the sum total used of polyetherols (P3) is not less than 2.

17. A rigid polyurethane or polyisocyanurate foam obtainable or obtained by a process according to any of claims 9 to 15.

18. The method of using a polyester polyol (P1) according to any of claims 1 to 8 or a polyol component (PK) according to claim 16 in the manufacture of rigid polyurethane foams or rigid polyisocyanurate foams.

## Revendications

1. Polyester-polyol (P1), pouvant être obtenu ou étant obtenu par estérification des composants (i) à (v) :
(i) 10 à 70 % en moles d'au moins un composé du groupe constitué par l'acide téréphtalique (TPA), le diméthyltéréphtalate (DMT), le polyéthylène téréphtalate (PET), l'anhydride de l'acide phtalique (PSA), l'acide phtalique et l'acide isophtalique,
(ii) 0,1 à 30 % en moles d'un ou de plusieurs acides gras et/ou dérivés d'acides gras,
(iii) 10 à 70 % en moles d'un ou de plusieurs diols aliphatiques ou cycloaliphatiques contenant 2 à 18 atomes C ou leurs alcoxylates,
(iv) 5 à 70 % en moles d'un polyéther-polyol, fabriqué par l'alcoxylation d'une molécule de départ aromatique ayant une fonctionnalité supérieure ou égale à 2,
(v) 0 à 70 % en moles d'un tri- ou polyol différent du composant (iv),
à chaque fois par rapport à la quantité totale des composants (i) à (v), la somme des quantités des composants (i) à (v) utilisés étant de 100 % en moles.

2. Polyester-polyol (P1) selon la revendication 1, dans lequel les composants (i) à (v) sont utilisés en les quantités suivantes :
le composant (i) en une quantité dans la plage allant de 25 à 40 % en moles,
le composant (ii) en une quantité dans la plage allant de 8 à 14 % en moles,
le composant (iii) en une quantité dans la plage allant de 25 à 55 % en moles,
le composant (iv) en une quantité dans la plage allant de 12 à 18 % en moles, et
le composant (v) en une quantité dans la plage allant de 0 à 18 % en moles,
à chaque fois par rapport à la quantité totale des composants (i) à (v), la somme des quantités des composants (i) à (v) utilisés étant de 100 % en moles.

3. Polyester-polyol (P1) selon la revendication 1 ou 2, dans lequel le composant (i) est choisi dans le groupe constitué par l'acide téréphtalique et le diméthyltéréphtalate (DMT).

4. Polyester-polyol (P1) selon l'une quelconque des revendications 1 à 3, dans lequel le composant (ii) est choisi dans le groupe constitué par l'acide oléique, l'huile de soja, l'huile de colza et le suif.

5. Polyester-polyol (P1) selon l'une quelconque des revendications 1 à 4, dans lequel le composant (iii) est choisi dans le groupe constitué par le diéthylène glycol (DEG) et le monoéthylène glycol (MEG).

6. Polyester-polyol (P1) selon l'une quelconque des revendications 1 à 5, dans lequel le composant (iv) peut être obtenu ou est obtenu par éthoxylation d'un polyol aromatique ayant une fonctionnalité supérieure à 2.

7. Polyester-polyol (P1) selon l'une quelconque des revendications 1 à 6, dans lequel le composant (iv) peut être obtenu ou est obtenu par éthoxylation d'une composition constituée par des isomères de toluylène-diamine, et la teneur de la composition en isomères de toluylène-diamine ayant une position vicinale des deux groupes amino est d'au moins 90 % en poids.

8. Polyester-polyol (P1) selon l'une quelconque des revendications 1 à 7, dans lequel le polyester-polyol (P1) présente un poids moléculaire moyen en nombre dans la plage allant de 450 g/mol à 800 g/mol.

9. Procédé de fabrication de mousses dures de polyuréthane ou de mousses dures de polyisocyanurate comprenant la mise en réaction de
A) un composant (A) contenant au moins un composé choisi dans le groupe constitué par les diisocyanates organiques, les diisocyanates organiques modifiés, les polyisocyanates organiques et les polyisocyanates organiques modifiés, avec
B) un composant polyol (PK) contenant
(b1.1) au moins un polyester-polyol (P1) selon l'une quelconque des revendications 1 à 8,
(b2) au moins un agent ignifuge,
(b3) au moins un agent gonflant,
(b4) au moins un catalyseur.

10. Procédé selon la revendication 9, dans lequel le composant polyol (PK) contient un ou plusieurs des composés suivantes :
(b1.2) au moins un polyester-polyol (P2), qui est différent du polyester-polyol (P1),
(b1.3) au moins un composé choisi dans le groupe constitué par les polyétherols (P3), les composés contenant au moins deux groupes réactifs avec les isocyanates, les allongeurs de chaînes et les agents de réticulation,
(b5) d'autres adjuvants et/ou additifs.

11. Procédé selon la revendication 10, **caractérisé en ce que** le rapport en masse entre la somme des polyesterols (P1) et (P2) et la somme des polyétherols (P3) utilisés est d'au moins 0,1.

12. Procédé selon la revendication 10 ou 11, dans lequel, outre le polyester-polyol (P1), aucun polyester-polyol (P2) supplémentaire n'est contenu dans le composant polyol (PK).

13. Procédé selon l'une quelconque des revendications 10 à 12, dans lequel le composant polyéther-polyol selon (b1.3) contient exclusivement du polyéthylène glycol, et aucun polyéther-polyol supplémentaire n'est utilisé.

14. Procédé selon l'une quelconque des revendications 9 à 13, dans lequel le composant agent ignifuge (b2) contient exclusivement du phosphate de tris-(2-chloropropyle) (TCPP), et aucun agent ignifuge supplémentaire n'est utilisé.

15. Procédé selon l'une quelconque des revendications 9 à 14, dans lequel le composant agent gonflant (b5) comprend des agents gonflants chimiques et physiques, l'agent gonflant chimique étant choisi dans le groupe constitué par l'eau, les mélanges acide formique-eau et l'acide formique, et l'agent gonflant physique étant constitué par un ou plusieurs isomères de pentane.

16. Composant polyol (PK), contenant :
(b1.1) 50 à 90 % en poids du polyester-polyol (P1) selon l'une quelconque des revendications 1 à 8,
(b1.2) 0 à 20 % en poids d'au moins un polyester-polyol (P2),
(b1.3) 2 à 9 % en poids d'au moins un polyéther-polyol (P3),
(b2) 5 à 30 % en poids d'au moins un agent ignifuge,
(b3) 1 à 30 % en poids d'au moins un agent gonflant,
(b4) 0,5 à 10 % en poids d'au moins un catalyseur, et
(b5) 0,5 à 20 % en poids d'autres adjuvants et additifs,
à chaque fois par rapport au poids total du composant polyol (PK), la somme des % en poids étant de 100 % en poids, et le rapport en masse entre la somme des polyesterols (P1) et (P2) et la somme des polyétherols (P3) utilisés étant d'au moins 2.

17. Mousses dures de polyuréthane ou mousses dures de polyisocyanurate, pouvant être obtenues ou étant obtenues par un procédé selon l'une quelconque des revendications 9 à 15.

18. Utilisation d'un polyester-polyol (P1) selon l'une quelconque des revendications 1 à 8 ou d'un composant polyol (PK) selon la revendication 16 pour la fabrication de mousses dures de polyuréthane ou mousses dures de polyisocyanurate.
